# FASCICULE DE BREVET EUROPEEN

(11) **EP 3 247 633 B1**
(45) Date de publication et mention de la délivrance du brevet: **01.08.2018**
(21) Numéro de dépôt: 16702580.8
(22) Date de dépôt: 21.01.2016
(51) Int. Cl.: B64D 29/06, F02K 1/72

(54) **ENSEMBLE ARRIÈRE DE NACELLE POUR TURBORÉACTEUR COMPRENANT UN BERCEAU DE SUSPENSION**
HINTERE GONDELANORDNUNG FÜR EIN STRAHLTRIEBWERK MIT EINEM HÄNGERAHMEN
REAR NACELLE ASSEMBLY FOR A TURBOJET COMPRISING A SUSPENSION CRADLE

(30) Priorité: 21.01.2015 FR 1550492
(43) Date de publication de la demande: 29.11.2017
(73) Titulaire: Safran Nacelles, 76700 Gonfreville-l'Orcher (FR)
(72) Inventeur: BOILEAU, Patrick, 76700 Gonfreville L'orcher (FR)
(74) Mandataire: Chevalier, Renaud Philippe
(86) Numéro de dépôt international: PCT/FR2016/050121
(87) Numéro de publication internationale: WO 2016/116711

(56) Documents cités:
- EP-A2- 2 690 018
- WO-A1-2013/160627
- FR-A1- 2 995 637
- FR-A1- 3 002 785

## Description

L'invention concerne un ensemble arrière de nacelle pour turboréacteur comprenant un berceau et un dispositif d'inversion de poussée à grilles mobiles pour nacelle de turboréacteur d'aéronef.

Un aéronef est généralement mû par plusieurs turboréacteur logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositif d'actionnement annexes comprennent notamment un dispositif d'inversion de poussée.

Une nacelle de turboréacteur présente généralement une structure sensiblement tubulaire comprenant une entrée d'air en amont du turboréacteur, une section médiane destinée à entourer une soufflante dudit turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

La section aval d'une nacelle pour un tel turboréacteur présente généralement une structure externe fixe, dite Outer Fixed Structure (OFS) et une structure interne fixe concentrique, dite Inner Fixed Structure (IFS), entourant une section aval du turboréacteur abritant le générateur de gaz du turboréacteur.

Les structures interne et externe fixes définissent la veine destinée à canaliser le flux d'air froid qui circule à l'extérieur du turboréacteur.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues et aérofreins de l'avion.

De manière générale, la structure d'un inverseur comprend un capot qui est monté mobile en translation longitudinale d'avant en arrière selon une direction sensiblement parallèle à l'axe de la nacelle, entre une position de fermeture dans laquelle le capot assure la continuité aérodynamique de la nacelle, et une position d'ouverture dans laquelle le capot ouvre un passage dans la nacelle.

Dans le cas d'un inverseur à grilles de déviation, la réorientation du flux d'air est effectuée par des grilles de déviation, associées à des volets d'inversion venant bloquer au moins partiellement la veine de circulation d'air, le capot n'ayant qu'une simple fonction de coulissement visant à découvrir ou recouvrir ces grilles de déviation.

Les volets d'inversion, également appelés volets de blocage, quant à eux, sont activés et entraînés par le coulissement du capot mobile jusqu'à venir obstruer au moins partiellement la veine en aval des grilles, de manière à optimiser la réorientation du flux d'air froid.

On connaît des nacelles dites à structure en O, connues sous la terminologie anglo-saxonne « O-Duct », qui possèdent une structure aval présentant une structure unique sensiblement périphérique s'étendant depuis un côté du mât réacteur jusqu'à l'autre côté.

Il s'ensuit qu'une telle structure présente généralement un unique capot sensiblement périphérique qui, à fin de maintenance, s'ouvre par translation aval le long de l'axe longitudinal de la nacelle.

Pour une description détaillée, on pourra se reporter aux documents FR 2 911 372 et FR 2 952 681.

Par ailleurs, les nacelles à structure en O comportent des grilles de déviation qui sont montées mobiles en translation et aptes à être rétractées au moins partiellement dans l'épaisseur de la section médiane de la nacelle et viennent ainsi chevaucher le carter de soufflante lorsque l'inverseur de poussée est inactif, en position de jet direct. En position d'inversion de poussée, les grilles de déviation sont déplacées avec le capot mobile.

Dans le cas d'un inverseur de poussée pour une nacelle à structure en O, le mât peut être équipé de rails permettant le coulissement du capot mobile et des grilles.

Sur des ensemble propulsifs modernes, de grande dimension et possédant des structures d'une grande souplesse, cette configuration peut induire des contraintes importantes dans la structure de l'inverseur de poussée.

On connait également un dispositif d'inversion de poussée décrit dans le document FR-A-3002785, qui comporte des rails qui sont agencés de part et d'autre du mât et qui assurent le coulissement du capot mobile et des grilles de déviation.

Ce type de dispositif présente des inconvénients notamment en ce qu'en cas de déplacement relatif du turboréacteur par rapport au mât, les grilles mobiles, qui sont fixées sur le mât, risques d'être soumises à des efforts de déformation.

En effet, pour limiter le volume des nacelles modernes, notamment la section radiale des nacelles, la section des grilles mobiles est limitée pour réduire leur encombrement, de sorte que l'inertie des grilles et la résistance mécanique qu'elles opposent est réduite.

De plus, il existe également un risque de déplacement relatif des rails entre eux et des variations géométriques importantes qui risquent de compromettre le bon fonctionnement de la cinématique de l'inverseur de poussée.

Enfin, le montage / démontage de l'ensemble propulsif implique de démonter tout ou partie de l'inverseur de poussée.

La présente invention vise notamment à résoudre ces inconvénients et se rapporte pour ce faire à un ensemble arrière de nacelle pour turboréacteur comprenant au moins un dispositif d'inversion de poussée par redirection d'un flux d'air circulant d'amont en aval dans une veine du turboréacteur et un mât conçu pour relier la nacelle sur la structure de l'aéronef, la nacelle s'étendant longitudinalement d'avant en arrière suivant un axe, le dispositif d'inversion de poussée comprenant au moins :
- un capot qui est monté mobile en translation longitudinale d'avant en arrière selon une direction sensiblement parallèle à l'axe de la nacelle, entre une position de fermeture dans laquelle le capot assure la continuité aérodynamique de la nacelle, et une position d'ouverture dans laquelle le capot ouvre un passage dans la nacelle, et
- au moins une grille coulissante d'inversion de poussée qui est entraînée par le capot mobile, entre une position escamotée entre un carter de soufflante et une enveloppe externe de la nacelle, correspondant à la position de fermeture du capot, et une position d'inversion de poussée correspondant à la position d'ouverture du capot, position dans laquelle la grille coulissante est déplacée vers l'aval de manière à pouvoir s'étendre à travers ledit passage ouvert par le capot, caractérisé en ce qu'il est équipé d'un berceau qui comporte un premier longeron et un second longeron qui s'étendent longitudinalement de part et d'autre du mât, lesdits longerons portant chacun des moyens de guidage en coulissement du capot mobile et de la grille coulissante, une partie arrière du berceau étant reliée sur le mât par un premier moyen de liaison arrière et une partie avant du berceau étant reliée sur le turboréacteur par un second moyen de liaison avant, de sorte que le berceau est adapté pour suivre les mouvements du turboréacteur.

Ainsi, l'ensemble selon l'invention permet au dispositif d'inversion de poussée de suivre les mouvements du turboréacteur et par conséquent de réduire les contraintes transmises à l'inverseur de poussée.

Avantageusement, le berceau contribue à limiter les déformations du mât et de l'inverseur de poussée. Le berceau selon l'invention permet également de limiter les mouvements du turboréacteur.

Selon un autre aspect, le second moyen de liaison avant est relié sur le carter de soufflante du turboréacteur.

Ainsi, l'ensemble selon l'invention permet de favoriser la pose et la dépose de l'inverseur de poussée et de l'ensemble propulsif.

De plus, le premier moyen de liaison arrière du berceau et le second moyen de liaison avant du berceau sont du type démontable pour favoriser la pose et la dépose l'inverseur de poussée et du reste de l'ensemble propulsif.

Avantageusement, le premier longeron et le second longeron du berceau sont reliés entre eux par au moins une traverse conçue pour assurer le passage des efforts entre les longerons.

Cette caractéristique offre une tenue mécanique du berceau performante.

Aussi, les moyens de guidage en coulissement du capot mobile et de la grille coulissante comportent au moins une première paire de rails de guidage de la grille, comprenant un premier rail et un second rail qui sont agencés de part et d'autre du mât et qui sont conçus pour assurer le coulissement de la grille d'inversion de poussée.

De même, les moyens de guidage en coulissement du capot mobile et de la grille coulissante comportent au moins une seconde paire de rails de guidage du capot, comprenant un premier rail et un second rail qui sont agencés de part et d'autre du mât et qui sont conçus pour assurer le coulissement du capot mobile.

Selon un exemple de réalisation, le premier rail de la première paire de rails de guidage de la grille et le premier rail de la seconde paire de rails de guidage du capot sont alignés sur une même ligne droite, et le second rail de la première paire de rails de guidage de la grille et le second rail de la seconde paire de rails de guidage du capot sont alignés sur une même ligne droite.

Le premier longeron du berceau comporte :
- une première portion de liaison qui est délimitée latéralement par un premier bord longitudinal qui s'étend au voisinage du mât, et par un second bord longitudinal qui porte le premier rail de guidage de la grille,
- une seconde portion de liaison qui est délimitée latéralement par un premier bord longitudinal qui s'étend au voisinage du mât, et par un second bord longitudinal qui porte le second rail de guidage de la grille.

Aussi, chaque portion de liaison comprend une ouverture qui est découverte par le capot mobile dans sa position d'ouverture, pour permettre la redirection du flux d'air, ladite ouverture étant adaptée pour être tout ou partie obstruée selon les besoins.

Cette caractéristique permet notamment de jouer sur le rapport entre la surface d'éjection de la tuyère de l'ensemble propulsif et la surface d'éjection du passage découvert par le capot mobile de l'inverseur.

Selon une variante de réalisation, la nacelle présente une structure interne fixe qui comporte des îlots reliés sur le berceau.Selon une autre variante de réalisation, le dispositif comporte au moins un verrou de sécurité de non déploiement intempestif du capot mobile.

De plus, le berceau présente une conception symétrique suivant un plan de symétrie passant par l'axe de la nacelle.

L'invention concerne également une nacelle de turboréacteur, qui est équipée d'au moins un ensemble du type décrit précédemment.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus d'ensemble qui illustre une nacelle équipée d'un dispositif d'inversion de poussée comportant un berceau portant un capot représenté en position de fermeture, selon l'invention ;
- la figure 2 est une vue de dessus similaire à celle de la figure 1, qui illustre le capot en position d'ouverture ;
- la figure 3 est une vue de détail en perspective, qui illustre le berceau du dispositif d'inversion de poussée de la figure 1 ;
- la figure 4 est une vue de détail en perspective, qui illustre le berceau du dispositif d'inversion de poussée monté sur la nacelle, représenté sans le capot mobile ;
- la figure 5 est une vue d'ensemble tronquée en perspective qui illustre la nacelle de la figure 1 en cours de montage / démontage sur le mât de l'aéronef.

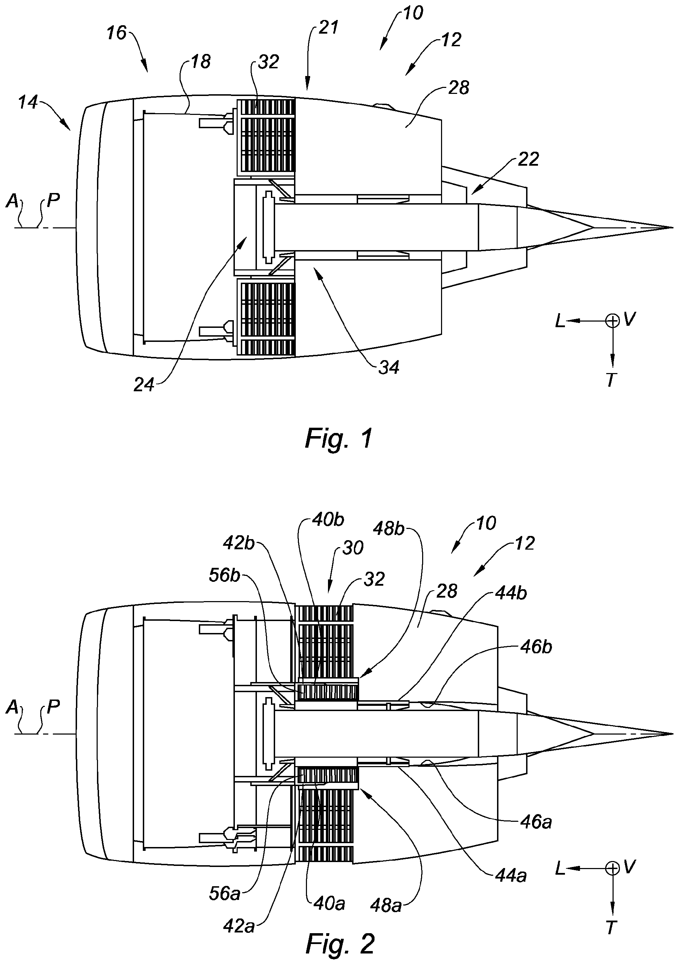

Dans la description et les revendications, on utilisera à titre non limitatif les expressions « supérieur », « inférieur » et « bas », « haut » en référence à la partie supérieure et à la partie inférieure respectivement des figures 1 à 5.

De plus, pour clarifier la description et les revendications, on adoptera à titre non limitatif la terminologie longitudinal, vertical et transversal en référence au trièdre L, V, T indiqué aux figures, dont l'axe L longitudinal est parallèle à l'axe de la nacelle.

A noter également que dans la présente demande de brevet, les termes « amont » et «aval » doivent s'entendre par rapport à la circulation du flux d'air à l'intérieur de l'ensemble propulsif formé par la nacelle et le turboréacteur, c'est-à-dire de la gauche vers la droite selon les figures 1 à 5.

Aussi, pour faciliter la compréhension de la description, les éléments identiques et symétriques suivant le plan P de symétrie sont indiqués par des mêmes références numériques distinguées par la lettre « a » ou « b ».

On a représenté à la figure 1 un ensemble arrière de nacelle 12 comportant un dispositif 10 d'inversion de poussée pour nacelle 12 de turboréacteur (non visible) d'aéronef par redirection d'un flux d'air circulant d'amont en aval dans une veine.

On entend ici par turboréacteur la partie aussi appelée « moteur » de l'ensemble propulsif formé par la nacelle 12 et le turboréacteur, c'est-à-dire la partie qui est agencée au centre de la nacelle 12.

La nacelle 12 présente une structure sensiblement tubulaire qui s'étend longitudinalement suivant l'axe central A et qui comprend une entrée d'air 14 en amont du turboréacteur, une section médiane 16 destinée à entourer une soufflante 18 du turboréacteur, une section aval 20 destinée à entourer la chambre de combustion du turboréacteur et intégrant le dispositif 10 d'inversion de poussée, et une tuyère 21 d'éjection dont la sortie est située en aval du turboréacteur.

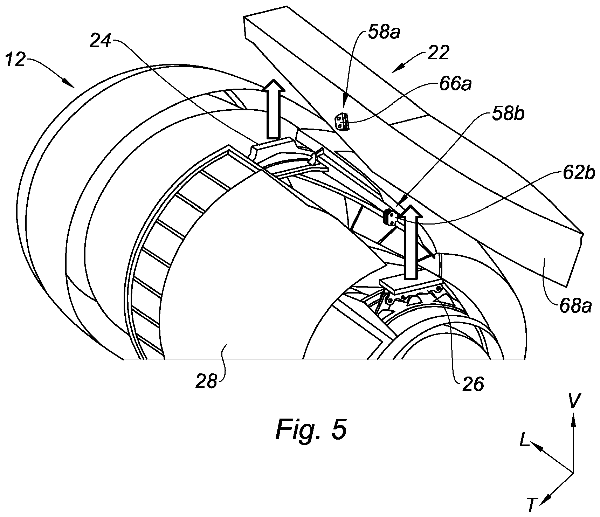

Comme on peut le voir à la figure 5, la nacelle 12 est reliée sur la structure de l'aéronef par un mât 22 qui porte le turboréacteur au moyen d'une première suspension avant 24 fixée sur le carter de la soufflante 18 du turboréacteur et d'une seconde suspension arrière 26.

Le dispositif 10 d'inversion de poussée comprend un capot 28 qui est monté mobile en translation longitudinale d'avant en arrière suivant l'axe A de la nacelle 12, entre une position de fermeture, représentée à la figure 1, dans laquelle le capot 28 assure la continuité aérodynamique de la nacelle 12, et une position d'ouverture, représentée à la figure 2, dans laquelle le capot 28 ouvre un passage 30 de déviation du flux d'air dans la nacelle 12.

De plus, le dispositif 10 comporte des grilles coulissantes 32 d'inversion de poussée qui sont entraînées par le capot 28 mobile, entre une position escamotée entre le carter de soufflante 18 et l'enveloppe externe de la nacelle 12, correspondant à la position de fermeture du capot 28, et une position d'inversion de poussée correspondant à la position d'ouverture du capot 28, position dans laquelle les grilles coulissantes 32 sont déplacées vers l'aval de manière à pouvoir s'étendre à travers le passage 30 ouvert par le capot 28 mobile dans la nacelle 12.

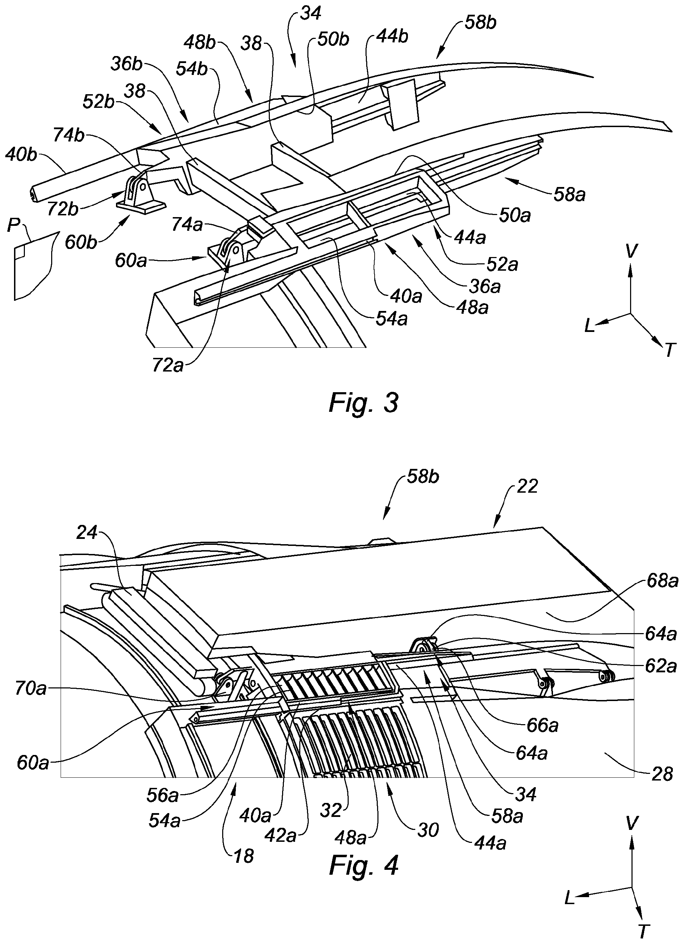

Conformément à l'invention, l'ensemble arrière de nacelle 12 est équipé d'un berceau 34, représenté plus en détails aux figures 3 et 4, qui présente une conception symétrique suivant un plan P vertical de symétrie passant par l'axe A longitudinal de la nacelle 12.

Le berceau 34 comporte un premier longeron 36a et un second longeron 36b qui s'étendent longitudinalement de part et d'autre du mât 22, et qui sont reliés entre eux par deux traverses 38 transversales conçues pour assurer le passage des efforts entre les deux longerons 36a, 36b.

A titre non limitatif, les traverses 38 peuvent être remplacées par des bielles transversales.

Les longerons 36a, 36b comportent chacun des moyens de guidage en coulissement du capot 28 mobile et des grilles 32 coulissantes.

Les moyens de guidage en coulissement comportent une première paire de rails de guidage des grilles 32 qui comprend un premier rail 40a et un second rail 40b qui s'étendent longitudinalement, qui sont agencés symétriquement suivant le plan P de symétrie, et qui sont conçus pour assurer le coulissement des grilles 32 d'inversion de poussée.

A cet effet, en référence à la figure 2, les grilles 32, de forme globalement annulaire en C autour de l'axe A de la nacelle 12, présentent un premier bord de guidage 42a et un second bord de guidage 42b qui coopèrent avec le premier rail 40a et le second rail 40b respectivement.

De plus, les moyens de guidage en coulissement comportent une seconde paire de rails de guidage du capot 28 qui comprend un premier rail 44a et un second rail 44b qui s'étendent longitudinalement, qui sont agencés symétriquement suivant le plan P de symétrie, et qui sont conçus pour assurer le coulissement du capot 28 mobile.

A cet effet, le capot 28 mobile, de forme globalement annulaire en C autour de l'axe A de la nacelle 12, présente un premier bord de guidage 46a et un second bord de guidage 46b qui coopèrent avec le premier rail 44a et le second rail 44b respectivement.

Selon un autre aspect, le premier longeron 36a du berceau 34 comporte une première portion de liaison 48a qui est délimitée latéralement par un premier bord 50a longitudinal qui s'étend au voisinage du mât 22, et par un second bord 52a longitudinal qui porte le premier rail 40a de guidage des grilles 32 coulissantes.

Par symétrie, le second longeron 36b du berceau 34 comporte une seconde portion de liaison 48b qui est délimitée latéralement par un premier bord 50b longitudinal qui s'étend au voisinage du mât 22, et par un second bord 52b longitudinal qui porte le second rail 40b de guidage des grilles 32 coulissantes.

Les rails de guidage des grilles 32 sont écartés transversalement par rapport aux rails de guidage du capot 28 pour permettre l'agencement de la suspension avant 24 entre les rails de guidage des grilles 32.

En outre, les rails de guidage des grilles 32 peuvent être décalés verticalement également par rapport aux rails de guidage du capot 28.

Toutefois, lorsqu'un tel agencement n'est pas nécessaire, selon une variante de réalisation non représentée, le premier rail 40a de la première paire de rails de guidage des grilles 32 et le premier rail 44a de la seconde paire de rails de guidage du capot 28 sont alignés sur une même ligne droite.

De même, par symétrie, le second rail 40b de la première paire de rails de guidage des grilles 32 et le second rail 44b de la seconde paire de rails de guidage du capot 28 sont alignés sur une même ligne droite.

Ainsi, selon cette variante de réalisation, les rails de guidage des grilles 32 et les rails de guidage du capot 28 peuvent être réalisés en une seule pièce.

Aussi, chaque portion de liaison 48a, 48b comprend une ouverture 54a, 54b, illustrée à la figure 3, qui est découverte par le capot 28 mobile dans sa position d'ouverture, pour permettre la redirection du flux d'air.

Selon un exemple de réalisation préféré, illustré à la figure 2, chaque ouverture 54a, 54b est équipée d'une grille fixe 56a, 56b fixe respectivement, chaque grille comportant des ailettes conçues pour rediriger le flux d'air vers l'avant de la nacelle 12, pour participer à l'inversion de poussée, lorsque le capot 28 mobile occupe sa position d'ouverture.

Avantageusement, les ailettes des grilles fixes 56a, 56b peuvent être agencées de façon à orienter le flux d'air suivant un angle incliné transversalement pour éviter de rediriger le flux d'air vers l'aile de l'aéronef.

En variante, chaque ouverture 54a, 54b, ou une des ouvertures 54a, 54b, peut être tout ou partie obstruée pour optimiser l'efficacité de l'inverseur de poussée.

En effet, en jouant sur la surface d'éjection des ouvertures 54a, 54b, il est possible de jouer sur le rapport entre la surface d'éjection de la tuyère de l'ensemble propulsif et la surface d'éjection du passage découvert par le capot 28 mobile de l'inverseur. Ce rapport, qui idéalement tend vers la valeur un, est connu sous la dénomination anglaise « area match ».

Selon un autre aspect de l'invention, illustré notamment à la figure 4, une partie arrière, ou aval, du berceau 34 est reliée sur le mât 22 par un premier moyen de liaison arrière 58a, 58b, et une partie avant, ou amont, du berceau 34 est reliée sur le turboréacteur par un second moyen de liaison avant 60a, 60b, de sorte que le berceau 34 est adapté pour suivre les mouvements du turboréacteur.

Selon un exemple de réalisation, le moyen de liaison arrière comporte une première fixation arrière 58a du type chape comportant une partie femelle 62a qui est formée de deux oreilles en vis-à-vis qui s'étendent transversalement depuis une partie arrière du premier longeron 36a du berceau 34 et qui délimitent entre elles une fente 64a verticale transversale.

De façon complémentaire, la première fixation arrière 58a comporte une partie mâle 66a qui s'étend transversalement depuis un premier flan 68a du mât 22 et qui est adaptée pour coopérer avec la fente 64a complémentaire prévue à cet effet.

La partie femelle 62a et la partie mâle 66a de la première fixation arrière 58a sont fixées entre elles par deux axes (non représentés) longitudinaux qui traversent la partie femelle 62a et la partie mâle 66a et qui sont amovibles pour permettre le désaccouplement de la partie femelle 62a et la partie mâle 66a.

Par symétrie suivant le plan P, le moyen de liaison arrière comporte une seconde fixation arrière 58b (visible partiellement aux figures 3 et 5) qui est similaire à la première fixation arrière 58a décrite précédemment.

Comme on peut le voir à la figure 5, les fixations arrières 58a, 58b sont agencées au voisinage, et en amont, de la suspension arrière 26 du turboréacteur.

Aussi, le moyen de liaison avant comporte une première fixation avant 60a du type chape qui comporte une partie femelle 70a formée de deux oreilles longitudinales en vis-à-vis qui s'étendent verticalement depuis le carter de soufflante 18 et qui délimitent entre elles une fente 72a verticale transversale.

De façon complémentaire, la première fixation avant 60a comporte une partie mâle 74a, formant bras, qui s'étend longitudinalement depuis la traverse 38 avant du berceau 34 et qui est adaptée pour coopérer avec la fente 72a complémentaire prévue à cet effet.

La partie femelle 70a et la partie mâle 74a de la première fixation avant 60a sont fixées entre elles par deux axes (non représentés) transversaux qui traversent la partie femelle 70a et la partie mâle 74a et qui sont amovibles pour permettre le désaccouplement de la partie femelle 70a et la partie mâle 74a.

Par symétrie suivant le plan P, le moyen de liaison avant comporte une seconde fixation avant 60b (visible aux figures 3 et 5) qui est similaire à la première fixation avant 60a décrite précédemment.

Comme on peut le voir à la figure 3, les fixations avant 60a, 60b sont agencées au voisinage, et en aval, de la suspension avant 24 du turboréacteur.

Ainsi, en cas de mouvement du turboréacteur, notamment en cas de cabrage, le dispositif 10 d'inversion de poussée suit globalement ce mouvement du turboréacteur, le berceau 34 accompagnant le mouvement transmis par le moyen de liaison avant 60a, 60b fixé sur le carter de la soufflante 18.

Cette caractéristique permet notamment aux grilles 32 coulissantes et au capot 28 mobile, ainsi que leur rails de guidage 40a, 40b, 44a, 44b de suivre le mouvement du turbocompresseur.

Aussi, comme on peut le voir à la figure 5, l'invention permet une pose et une dépose de l'ensemble propulsif sur le mât 22 rapide et simplifiée.

En effet, la désolidarisation de la suspension avant 24 et de la suspension arrière 26 du turboréacteur, ainsi que la désolidarisation du moyen de liaison arrière 58a, 58b et du moyen de liaison avant 60a, 60b du berceau 34 sont suffisante pour désolidariser l'ensemble propulsif.

Avantageusement, selon une variante de réalisation non représentée, la nacelle 12 présente une structure interne fixe, qui entoure une section aval du turboréacteur et qui comporte des îlots reliés sur le berceau 34.De même, selon une variante de réalisation non représentée, le dispositif 10 d'inversion de poussée comporte des verrous de sécurité conçu pour empêcher le déploiement intempestif du capot 28 mobile.

La présente description de l'invention est donnée à titre d'exemple non limitatif.

## Revendications

1. Ensemble arrière de nacelle (12) pour turboréacteur comprenant au moins un dispositif (10) d'inversion de poussée par redirection d'un flux d'air circulant d'amont en aval dans une veine du turboréacteur et un mât (22) conçu pour relier la nacelle (12) sur la structure de l'aéronef, la nacelle (12) s'étendant longitudinalement d'avant en arrière suivant un axe (A), le dispositif (10) d'inversion de poussée comprenant au moins :
- un capot (28) qui est monté mobile en translation longitudinale d'avant en arrière selon une direction sensiblement parallèle à l'axe (A) de la nacelle (12), entre une position de fermeture dans laquelle le capot (28) assure la continuité aérodynamique de la nacelle (12), et une position d'ouverture dans laquelle le capot (28) ouvre un passage (30) dans la nacelle (12), et
- au moins une grille (32) coulissante d'inversion de poussée qui est entraînée par le capot (28) mobile, entre une position escamotée entre un carter de soufflante (18) et une enveloppe externe de la nacelle (12), correspondant à la position de fermeture du capot (28), et une position d'inversion de poussée correspondant à la position d'ouverture du capot (28), position dans laquelle la grille (32) coulissante est déplacée vers l'aval de manière à pouvoir s'étendre à travers ledit passage (30) ouvert par le capot (28),
**caractérisé en ce qu'**il est équipé d'un berceau (34) qui comporte un premier longeron (36a) et un second longeron (36b) qui s'étendent longitudinalement de part et d'autre du mât (22), lesdits longerons portant chacun des moyens de guidage (40a, 40b, 44a, 44b) en coulissement du capot (28) mobile et de la grille (32) coulissante, une partie arrière du berceau (34) étant reliée sur le mât (22) par un premier moyen de liaison arrière (58a, 58b) et une partie avant du berceau (34) étant configurée pour être reliée sur le turboréacteur par un second moyen de liaison avant (60a, 60b), de sorte que le berceau (34) est adapté pour suivre les mouvements du turboréacteur.

2. Ensemble arrière de nacelle (12) selon la revendication 1, **caractérisé en ce que** le second moyen de liaison avant (60a, 60b) est configuré pour être relié sur le carter de soufflante (18) du turboréacteur.

3. Ensemble arrière de nacelle (12) selon l'une quelconque des revendications précédentes, **caractérisé en ce que** le premier moyen de liaison arrière (58a, 58b) du berceau (34) et le second moyen de liaison avant (60a, 60b) du berceau (34) sont du type démontable pour favoriser la pose et la dépose de l'inverseur de poussée et de l'ensemble propulsif.

4. Ensemble arrière de nacelle (12) selon l'une quelconque des revendications précédentes, **caractérisé en ce que** le premier longeron (36a) et le second longeron (36b) du berceau (34) sont reliés entre eux par au moins une traverse (38) conçue pour assurer le passage des efforts entre les longerons (36a, 36b).

5. Ensemble arrière de nacelle (12) selon l'une quelconque des revendications précédentes, **caractérisé en ce que** les moyens de guidage (40a, 40b, 44a, 44b) en coulissement du capot (28) mobile et de la grille (32) coulissante comportent au moins :
- une première paire de rails (40a, 40b) de guidage de la grille (32), comprenant un premier rail (40a) et un second rail (40b) qui sont agencés de part et d'autre du mât (22) et qui sont conçus pour assurer le coulissement de la grille (32) d'inversion de poussée, et
- une seconde paire de rails (44a, 44b) de guidage du capot (28), comprenant un premier rail (44a) et un second rail (44b) qui sont agencés de part et d'autre du mât (22) et qui sont conçus pour assurer le coulissement du capot (28) mobile.

6. Ensemble arrière de nacelle (12) selon la revendication 5, **caractérisé en ce que** le premier rail (40a) de la première paire de rails (40a, 40b) de guidage de la grille (32) et le premier rail (44a) de la seconde paire de rails (44a, 44b) de guidage du capot (28) sont alignés sur une même ligne droite, et le second rail (40b) de la première paire de rails (40a, 40b) de guidage de la grille (32) et le second rail (44b) de la seconde paire de rails (44a, 44b) de guidage du capot (28) sont alignés sur une même ligne droite.

7. Ensemble arrière de nacelle (12) selon l'une quelconque des revendications précédentes, **caractérisé en ce que** le premier longeron (36a) du berceau (34) comporte :
- une première portion de liaison (48a) qui est délimitée latéralement par un premier bord (50a) longitudinal qui s'étend au voisinage du mât (22), et par un second bord (52a) longitudinal qui porte au moins le premier rail (40a) de guidage de la grille (32),
- une seconde portion de liaison (48b) qui est délimitée latéralement par un premier bord (50b) longitudinal qui s'étend au voisinage du mât (22), et par un second bord (52b) longitudinal qui porte au moins le second rail (40b) de guidage de la grille (32).

8. Ensemble arrière de nacelle (12) selon la revendication 7, **caractérisé en ce que** chaque portion de liaison (48a, 48b) comprend une ouverture (54a) qui est découverte par le capot (28) mobile dans sa position d'ouverture, pour permettre la redirection du flux d'air, ladite ouverture (54a) étant adaptée pour être tout ou partie obstruée selon les besoins.

9. Ensemble arrière de nacelle (12) selon l'une quelconque des revendications précédentes, **caractérisé en ce que** la nacelle (12) présente une structure interne fixe qui comporte des îlots reliés sur le berceau (34).

10. Ensemble arrière de nacelle (12) selon l'une quelconque des revendications précédentes, **caractérisé en ce que** le dispositif (10) comporte au moins un verrou de sécurité de non déploiement intempestif du capot (28) mobile.

11. Ensemble arrière de nacelle (12) selon l'une quelconque des revendications précédentes, **caractérisé en ce que** le berceau (34) présente une conception symétrique suivant un plan (P) de symétrie passant par l'axe (A) de la nacelle (12).

12. Nacelle (12) de turboréacteur, **caractérisée en ce qu'**elle est équipée d'au moins un ensemble arrière de nacelle (12) selon l'une quelconque des revendications précédentes.

## Patentansprüche

1. Hintere Gondelanordnung (12) für ein Strahltriebwerk, umfassend mindestens eine Vorrichtung (10) zur Schubumkehr durch Umleitung eines Luftflusses, der von der vorgelagerten Seite zur nachgelagerten Seite einer Leitung des Strahltriebwerks zirkuliert, und eine Matte (22), die entworfen ist, um die Gondel (12) auf der Struktur des Flugzeugs zu verbinden, wobei sich die Gondel (12) längs gerichtet von vorne nach hinten gemäß einer Achse (A) erstreckt, wobei die Vorrichtung (10) zur Schubumkehr mindestens Folgendes umfasst:
- eine Kappe (28), die beweglich in längs gerichteter Translation von vorne nach hinten gemäß einer Richtung, die im Wesentlichen parallel zur Achse (A) der Gondel (12) ist, zwischen einer Verschlussposition, in der die Kappe (28) die aerodynamische Güte der Gondel (12) sicherstellt, und einer Öffnungsposition montiert ist, in der die Kappe (28) einen Durchgang (30) in der Gondel (12) öffnet, und
- mindestens ein gleitendes Gitter (32) zur Schubumkehr, das von der beweglichen Kappe (28) angetrieben wird, zwischen einer eingeklappten Position zwischen einem Gebläsegehäuse (18) und einer Endumhüllung der Gondel (12), die der Verschlussposition der Kappe (28) entspricht, und einer Position zur Schubumkehr, die der Öffnungsposition der Kappe (28) entspricht, einer Position, in der das gleitende Gitter (32) hin zur nachgelagerten Seite verschoben wird, um sich durch den Durchgang (30), geöffnet durch die Kappe (28), erstrecken zu können,
**dadurch gekennzeichnet, dass** sie mit einem Rahmen (34) ausgestattet ist, der einen ersten Holm (36a) und einen zweiten Holm (36b) umfasst, die sich längs gerichtet auf beiden Seiten der Matte (22) erstrecken, wobei die Holme jeweils Führungsmittel (40a, 40b, 44a, 44b) tragen, die in der beweglichen Kappe (28) und dem gleitenden Gitter (32) gleiten, wobei ein hinterer Teil des Rahmens (34) auf der Matte (22) durch ein erstes hinteres Verbindungsmittel (58a, 58b) verbunden ist, und wobei ein vorderer Teil des Rahmens (34) konfiguriert ist, um auf dem Strahltriebwerk durch ein zweites vorderes Verbindungsmittel (60a, 60b) verbunden zu sein, so dass der Rahmen (34) ausgelegt ist, um den Bewegungen des Strahltriebwerks zu folgen.

2. Hintere Gondelanordnung (12) nach Anspruch 1, **dadurch gekennzeichnet, dass** das zweite vordere Verbindungsmittel (60a, 60b) konfiguriert ist, um auf dem Gebläsegehäuse (18) des Strahltriebwerks verbunden zu sein.

3. Hintere Gondelanordnung (12) nach einem der vorhergehenden Ansprüche, **dadurch gekennzeichnet, dass** das erste hintere Verbindungsmittel (58a, 58b) des Rahmens (34) und das zweite vordere Verbindungsmittel (60a, 60b) des Rahmens (34) von der demontierbaren Art sind, um die Anbringung und die Entfernung der Schubumkehr und der Antriebsanordnung zu erleichtern.

4. Hintere Gondelanordnung (12) nach einem der vorhergehenden Ansprüche, **dadurch gekennzeichnet, dass** der erste Holm (36a) und der zweite Holm (36b) des Rahmens (34) untereinander durch mindestens eine Querstrebe (38) verbunden sind, die entworfen ist, um den Übergang der Kräfte zwischen den Holmen (36a, 36b) sicherzustellen.

5. Hintere Gondelanordnung (12) nach einem der vorhergehenden Ansprüche, **dadurch gekennzeichnet, dass** die Führungsmittel (40a, 40b, 44a, 44b), die in der beweglichen Kappe (28) und dem gleitenden Gitter (32) gleiten, mindestens Folgendes umfassen:
- ein erstes paar Führungsschienen (40a, 40b) des Gitters (32), umfassend eine erste Schiene (40a) und eine zweite Schiene (40b), die auf beiden Seiten der Matte (22) angeordnet sind, und die entworfen sind, um das Gleiten des Gitters (32) zur Schubumkehr sicherzustellen, und
- ein zweites Paar Führungsschienen (44a, 44b) der Kappe (28), umfassend eine erste Schiene (44a) und eine zweite Schiene (44b), die auf beiden Seiten der Matte (22) angeordnet sind, und die entworfen sind, um das Gleiten der beweglichen Kappe (28) sicherzustellen.

6. Hintere Gondelanordnung (12) nach Anspruch 5, **dadurch gekennzeichnet, dass** die erste Schiene (40a) des ersten Paars Führungsschienen (40a, 40b) des Gitters (32) und die erste Schiene (44a) des zweiten Paars Führungsschienen (44a, 44b) der Kappe (28) auf einer gleichen geraden Linie ausgefluchtet sind, und die zweite Schiene (40b) des ersten Paars Führungsschienen (40a, 40b) des Gitters (32) und die zweite Schiene (44b) des zweiten Paars Führungsschienen (44a, 44b) der Kappe (28) auf einer gleichen geraden Linie ausgefluchtet sind.

7. Hintere Gondelanordnung (12) nach einem der vorhergehenden Ansprüche, **dadurch gekennzeichnet, dass** der erste Holm (36a) des Rahmens (34) Folgendes umfasst:
- einen ersten Verbindungsabschnitt (48a), der seitlich durch einen ersten längs gerichteten Rand (50a) begrenzt ist, der sich in der Nähe der Matte (22) erstreckt, und durch einen zweiten längs gerichteten Rand (52a), der mindestens die erste Führungsschiene (40a) des Gitters (32) trägt,
- einen zweiten Verbindungsabschnitt (48b), der seitlich von einem ersten längs gerichteten Rand (50b) begrenzt ist, der sich in der Nähe der Matte (22) erstreckt, und durch einen zweiten längs gerichteten Rand (52b), der mindestens die zweite Führungsschiene (40b) des Gitters (32) trägt,

8. Hintere Gondelanordnung (12) nach Anspruch 7, **dadurch gekennzeichnet, dass** jeder Verbindungsabschnitt (48a, 48b) eine Öffnung (54a) umfasst, die von der beweglichen Kappe (28) in ihrer Öffnungsposition aufgedeckt ist, um die Umleitung des Luftflusses zu ermöglichen, wobei die Öffnung (54a) ausgelegt ist, um vollständig oder teilweise je nach den Anforderungen verschlossen zu sein.

9. Hintere Gondelanordnung (12) nach einem der vorhergehenden Ansprüche, **dadurch gekennzeichnet, dass** die Gondel (12) eine fixe innere Struktur aufweist, die Verzweigung umfasst, die auf dem Rahmen (34) verbunden sind.

10. Hintere Gondelanordnung (12) nach einem der vorhergehenden Ansprüche, **dadurch gekennzeichnet, dass** die Vorrichtung (10) mindestens eine Sicherheitsverriegelung zur nicht vorzeitigen Entfaltung der beweglichen Kappe (28) umfasst.

11. Hintere Gondelanordnung (12) nach einem der vorhergehenden Ansprüche, **dadurch gekennzeichnet, dass** der Rahmen (34) einen symmetrischen Entwurf gemäß einer Symmetrieebene (P) aufweist, die durch die Achse (A) der Gondel (12) verläuft.

12. Strahltriebwerksgondel (12), **dadurch gekennzeichnet, dass** sie mit mindestens einer hinteren Gondelanordnung (12) nach einem der vorhergehenden Ansprüche ausgestattet ist.

## Claims

1. A rear nacelle assembly (12) for a turbojet engine comprising at least one thrust reverser device (10) by redirection of an air flow circulating from upstream to downstream in a flow path of the turbojet engine and a mast (22) designed to connect the nacelle (12) on the structure of the aircraft, the nacelle (12) extending longitudinally from front to back along an axis (A), the thrust reverser device (10) comprising at least:
- one cowl (28) which is movably mounted in longitudinal translation from front to back in a direction substantially parallel to the axis (A) of the nacelle (12), between a closed position in which the cowl (28) ensures the aerodynamic continuity of the nacelle (12), and an open position in which the cowl (28) opens a passage (30) in the nacelle (12), and
- at least one sliding thrust reverser cascade (32) which is driven by the movable cowl (28) between a retracted position between a fan casing (18) and an outer casing of the nacelle (12), corresponding to the closed position of the cowl (28), and a thrust reversal position corresponding to the open position of the cowl (28), position in which the sliding cascade (32) is displaced downstream so as to be able to extend through said passage (30) opened by the cowl (28),
**characterized in that** it is equipped with a cradle (34) which includes a first spar (36a) and a second spar (36b) which extend longitudinally on either side of the mast (22), said spars each carrying slidably guiding means (40a, 40b, 44a, 44b) of the movable cowl (28) and of the sliding cascade (32), a rear portion of the cradle (34) being connected on the mast (22) by a first rear connecting means (58a, 58b) and a front portion of the cradle (34) being configured to be connected on the turbojet engine by a second front connecting means (60a, 60b), such that the cradle (34) is adapted to follow the movements of the turbojet engine.

2. The rear nacelle assembly (12) according to claim 1, **characterized in that** the second front connecting means (60a, 60b) is configured to be connected on the fan casing (18) of the turbojet engine.

3. The rear nacelle assembly (12) according to any one of the preceding claims, **characterized in that** the first rear connecting means (58a, 58b) of the cradle (34) and the second front connecting means (60a, 60b) of the cradle (34) are of the dismountable type to promote the installation and removal of the thrust reverser and of the propulsion unit.

4. The rear nacelle assembly (12) according to any one of the preceding claims, **characterized in that** the first spar (36a) and the second spar (36b) of the cradle (34) are connected together by at least one cross beam (38) designed to ensure the passage of the forces between the spars (36a, 36b).

5. The rear nacelle assembly (12) according to any one of the preceding claims, **characterized in that** the slidably guiding means (40a, 40b, 44a, 44b) of the movable cowl (28) and of the sliding cascade (32) include at least:
- a first pair of guiding rails (40a, 40b) of the cascade (32), comprising a first rail (40a) and a second rail (40b) which are arranged on either side of the mast (22) and which are designed to ensure the sliding of the thrust reverser cascade (32), and
- a second pair of guiding rails (44a, 44b) of the cowl (28), comprising a first rail (44a) and a second rail (44b) which are arranged on either side of the mast (22) and which are designed to ensure the sliding of the movable cowl (28).

6. The rear nacelle assembly (12) according to claim 5, **characterized in that** the first rail (40a) of the first pair of guiding rails (40a, 40b) of the cascade (32) and the first rail (44a) of the second pair of guiding rails (44a, 44b) of the cowl (28) are aligned on the same straight line, and the second rail (40b) of the first pair of guiding rails (40a, 40b) of the cascade (32) and the second rail (44b) of the second pair of guiding rails (44a, 44b) of the cowl (28) are aligned on the same straight line.

7. The rear nacelle assembly (12) according to any one of the preceding claims, **characterized in that** the first spar (36a) of the cradle (34) includes:
- a first connecting portion (48a) which is laterally delimited by a first longitudinal edge (50a) which extends in the vicinity of the mast (22), and by a second longitudinal edge (52a) which carries at least the first guiding rail (40a) of the cascade (32),
- a second connecting portion (48b) which is laterally delimited by a first longitudinal edge (50b) which extends in the vicinity of the mast (22), and by a second longitudinal edge (52b) which carries at least the second guiding rail (40b) of the cascade (32).

8. The rear nacelle assembly (12) according to claim 7, **characterized in that** each connecting portion (48a, 48b) comprises an opening (54a) which is uncovered by the movable cowl (28) in its open position, in order to allow the redirection of the air flow, said opening (54a) being adapted to be in whole or in part obstructed as required.

9. The rear nacelle assembly (12) according to any one of the preceding claims, **characterized in that** the nacelle (12) has an inner fixed structure which includes bifurcation regions connected to the cradle (34).

10. The rear nacelle assembly (12) according to any one of the preceding claims, **characterized in that** the device (10) includes at least one security lock of inadvertent non-deployment of the movable cowl (28).

11. The rear nacelle assembly (12) according to any one of the preceding claims, **characterized in that** the cradle (34) has a symmetrical design along a plane of symmetry (P) passing through the axis (A) of the nacelle (12).

12. A turbojet engine nacelle (12), **characterized in that** it is equipped with at least one rear nacelle assembly (12) according to any one of the preceding claims.
